# DEMANDE DE BREVET EUROPEEN

(11) **EP 1 386 767 A1**
(43) Date de publication de la demande: **04.02.2004**
(21) Numéro de dépôt: 03291732.0
(22) Date de dépôt: 11.07.2003
(51) Int. Cl.: B60J 5/10

(54) **Agencement d'un ouvrant comportant deux modes d'ouverture a l'arriere d'un vehicule automobile**

(30) Priorité: 30.07.2002 FR 0209669
(71) Demandeur: Renault s.a.s., 92100 Boulogne Billancourt (FR)
(72) Inventeur: Grosdidier, François, 78130 Les Mureaux (FR)

(57) **Abrégé**

L'invention concerne un agencement pour l'obturation d'une ouverture arrière (12) de véhicule automobile (10), du type qui comporte un cadre porteur (28) sur lequel au moins une porte (36, 38) est montée pivotante entre une position ouverte et une position fermée, le cadre porteur (28) étant monté articulé sur le véhicule (10) autour d'un axe transversal supérieur (A1) entre une position horizontale haute et une position basse rabattue dans laquelle l'ouverture arrière (12) est obturée lorsque la porte (36, 38) est en position fermée, et du type qui comporte un mécanisme de verrouillage (72, 74) qui bloque sélectivement le pivotement de la porte (36, 38) par rapport au cadre porteur (28) et/ou l'articulation du cadre porteur (28) par rapport au véhicule (10), caractérisé en ce que la porte (36, 38) est montée pivotante sur le cadre porteur (28) autour d'un axe de pivotement (A2, A3) qui est orthogonal à l'axe transversal supérieur d'articulation (A1) du cadre porteur (28) sur le véhicule (10).

## Description

L'invention concerne un agencement pour l'obturation d'une ouverture de véhicule automobile, et notamment d'une ouverture arrière.

L'invention concerne, plus particulièrement, un agencement pour l'obturation d'une ouverture de véhicule automobile, et notamment d'une ouverture arrière, du type qui comporte un cadre porteur globalement plan sur lequel au moins une porte est montée pivotante entre une position extrême ouverte dans laquelle la porte est sensiblement orthogonale à l'élément porteur et une position extrême fermée dans laquelle la porte est sensiblement dans le même plan que le cadre porteur, qui est lui-même monté articulé par rapport à la structure du véhicule autour d'un axe transversal supérieur fixe entre une position haute dans laquelle le cadre porteur est sensiblement horizontal et une position basse rabattue dans laquelle l'ouverture arrière du véhicule est obturée lorsque la porte est en position extrême fermée, et du type qui comporte un mécanisme de verrouillage qui bloque sélectivement le pivotement de la porte par rapport au cadre porteur et/ou l'articulation du cadre porteur par rapport à la structure du véhicule.

Les véhicules automobiles du type « utilitaire » comportent généralement une ouverture arrière de chargement d'un compartiment arrière sur laquelle un ouvrant transversal arrière est agencé.

Pour articuler les ouvrants, et notamment les ouvrants transversaux arrière, sur la caisse du véhicule automobile, il est connu d'utiliser un système de charnières soit du type horizontal par rapport au véhicule, c'est-à-dire que l'ouvrant est par exemple constitué d'un hayon, soit du type vertical, c'est-à-dire que l'ouvrant est par exemple constitué de deux portes battantes. Ces types d'articulation permettent de dégager complètement l'ouverture arrière notamment obturée par l'ouvrant.

L'utilisateur définit généralement le type de charnières le plus adapté en fonction des contraintes d'utilisation du véhicule. Cependant, selon les cas il est intéressant de bénéficier de l'un des types d'articulation, plutôt que de l'autre.

Ainsi, s'il y a peu d'espace derrière le véhicule, il est plus avantageux que l'ouvrant arrière soit constitué par deux portes battantes qui nécessitent moins de place derrière le véhicule qu'un hayon pour leur ouverture.

En revanche, un hayon est plus adapté que des portes battantes dans le cas où le chargement doit être effectué de biais par rapport au plan transversal de l'ouverture arrière.

Un homme de métier pourra évaluer le type de configuration qui convient le mieux en fonction du besoin.

Chacune de ces solutions présente donc des avantages distincts. Cependant, un véhicule ne peut disposer que de l'une ou l'autre de ces solutions. Selon ces solutions connues, un ouvrant arrière ne peut pas être adapté à toutes les circonstances.

Pour répondre à ces problèmes, la présente invention propose un agencement pour obturer une ouverture arrière de véhicule automobile du type décrit précédemment, caractérisé en ce que la porte est montée pivotante par rapport au cadre porteur autour d'un axe de pivotement qui est orthogonal à l'axe transversal supérieur d'articulation du cadre porteur par rapport au véhicule.

Selon d'autres caractéristiques de l'invention :
- le cadre porteur comporte notamment une traverse transversale supérieure et un montant latéral vertical qui, en position rabattue, entourent le pourtour de l'ouverture arrière, à l'extérieur de ce dernier ;
- en position basse rabattue du cadre porteur, la porte, en position extrême fermée, obture l'ouverture arrière par coopération avec la totalité du pourtour de l'ouverture arrière ;
- le pourtour de l'ouverture arrière porte un joint avec lequel la porte coopère en position extrême fermée lorsque le cadre porteur est en position basse rabattue afin d'assurer globalement l'étanchéité de l'agencement ;
- il est prévu sur le véhicule automobile un logement en forme de gouttière qui entoure l'ouverture arrière et dans lequel le cadre porteur est logé en position rabattue ;
- le mécanisme de verrouillage comporte un premier verrou qui est susceptible de bloquer la porte par rapport au cadre porteur et un second verrou qui est susceptible de bloquer la porte par rapport à la caisse du véhicule automobile ;
- des moyens de commande de l'ouverture de l'ouvrant commandent sélectivement l'ouverture du premier verrou seul ou l'ouverture simultanée des deux verrous ;
- l'agencement comporte deux portes battantes dont chacune est montée pivotante par rapport au cadre porteur autour d'un axe vertical agencé au voisinage d'un montant vertical associé du cadre porteur.

D'autres caractéristiques et avantages de l'invention apparaîtront au cours de la lecture de la description détaillée qui suit pour la compréhension de laquelle on se reportera aux dessins annexés parmi lesquelles :
- la figure 1 représente l'arrière d'un véhicule automobile équipé d'un ouvrant qui est agencé sur l'ouverture arrière selon les enseignements de l'invention et qui comporte deux portes battantes en position extrême ouverte ;
- la figure 2 est une vue analogue à celle de la figure 1 et dans laquelle l'ouvrant est représenté dans une position fermée ;
- la figure 3 est une section longitudinal de l'agencement représenté à la figure 2 selon le plan de coupe 3-3 ;
- la figure 4 est une vue analogue à celle de la figure 1 et dans laquelle l'ouvrant est représenté dans une position ouverte haute.

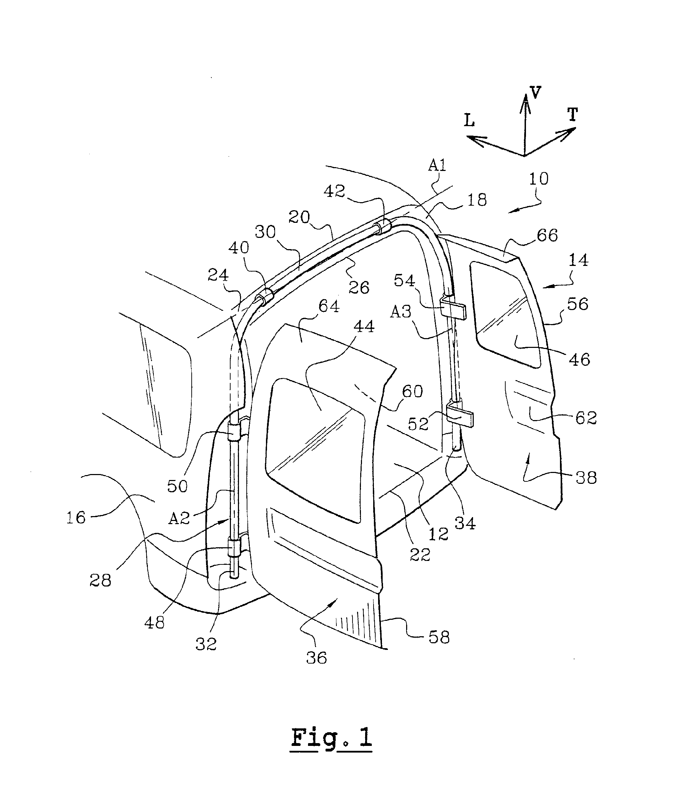

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

On a représenté à la figure 1 l'arrière d'un véhicule automobile 10 de type « utilitaire ». Il comporte une ouverture transversale arrière 12 d'accès à un compartiment qui est délimité verticalement par le pavillon 20 et par le plancher du véhicule 10. Le véhicule 10 comporte un ouvrant arrière 14 susceptible d'obturer l'ouverture arrière 12.

L'ouverture arrière 12 est globalement délimitée par deux ailes arrière gauche 16 et droite 18 sensiblement verticales, le pavillon 20 du véhicule 10 et un bord arrière du plancher 22 du compartiment arrière.

L'ouverture arrière 12 est ici entourée par un logement 24 en forme de gouttière qui longe les deux ailes verticales arrières 16 et 18 ainsi que le bord arrière du pavillon 20. Une bordure arrière libre 26 du logement 24 forme, avec le bord arrière du plancher 22, le pourtour de l'ouverture arrière 12.

L'ouvrant arrière 14 comporte un cadre porteur 28 qui est globalement plan et qui est ici constitué d'une traverse transversale supérieure 30 et de deux montants latéraux gauche 32 et droit 34 perpendiculaires à la traverse 30. Le cadre porteur 28 est notamment un support destiné à porter deux portes battantes gauche 36 et droite 38.

La traverse 30 du cadre porteur 28 est ici montée à rotation dans le logement 24 en forme de gouttière prolongeant le pavillon 20 du véhicule 10, par l'intermédiaire de deux charnières 40, 42, autour d'un axe transversal supérieur fixe A1, entre une position haute et une position basse rabattue.

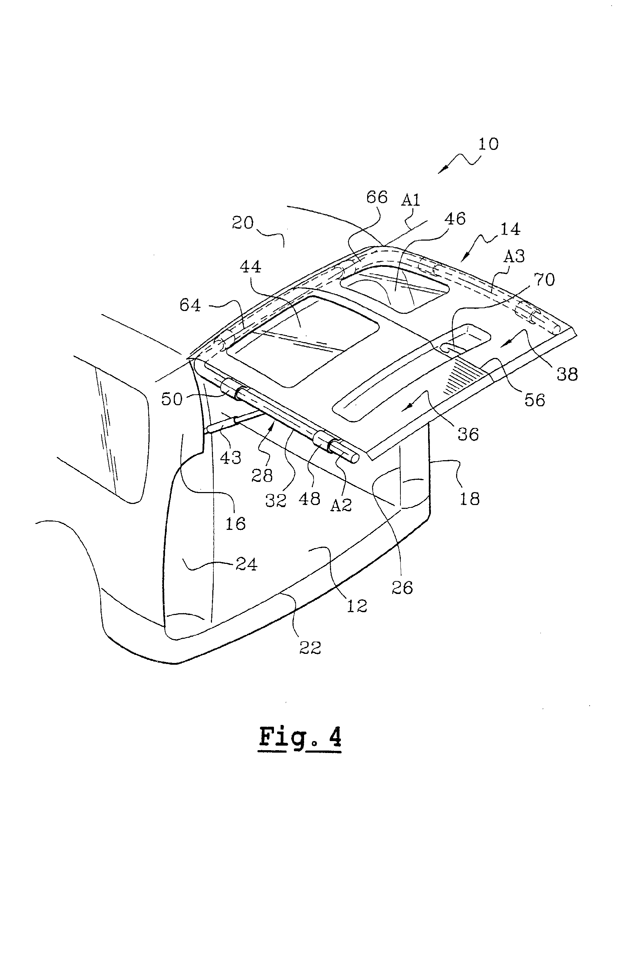

On a représenté le cadre porteur 28 en position haute à la figure 4. Les montants 32, 34 du cadre porteur 28 s'étendent alors horizontalement depuis la traverse 30 et vers l'arrière. Le plan du cadre porteur 28 se situe sensiblement dans le prolongement du pavillon 20. Selon ce mode de réalisation de l'invention, le véhicule 10 comporte un vérin équilibreur 43 qui est agencé entre l'aile arrière gauche 16 et le montant gauche 32 du cadre porteur 28.

Le cadre porteur 28 est représenté en position basse à la figure 1. Les deux montants 32, 34 s'étendent verticalement depuis la traverse supérieure 30 vers le bas et sont alors reçus dans le logement 24 en forme de gouttière. Le cadre porteur 28 entoure ainsi l'ouverture arrière 12.

Les deux portes battantes droite 38 et gauche 36 qui sont portées par le cadre porteur 28, sont susceptibles d'obturer chacune globalement une moitié verticale droite et gauche de l'ouverture arrière 12, respectivement. Chaque porte battante 36, 38 est notamment constituée d'un panneau comportant une fenêtre supérieure 44, 46.

La porte battante de droite 38 (respectivement de gauche 36) est montée pivotante sur le montant latéral droit 34 (respectivement gauche 32), du cadre porteur 28 par l'intermédiaire de deux charnières 52 et 54 (respectivement 48 et 50) autour d'un axe de pivotement A3 (respectivement A2) qui est ici sensiblement parallèle aux montants latéraux 32, 34, entre une position extrême fermée et une position extrême ouverte.

Dans la position extrême ouverte, qui est illustrée à la figure 1, les portes battantes 36, 38 sont globalement orthogonales au plan du cadre porteur 28.

Dans la position extrême fermée, les deux portes battantes 36, 38 se situent sensiblement dans le même plan que le cadre porteur 28, en recouvrant globalement l'espace compris entre les montants 32, 34 et la traverse 30 du cadre porteur 28. Le bord vertical gauche 56 de la porte battante de droite 38 chevauche alors le bord vertical droit 58 de la porte battante de gauche 36 de manière à maintenir cette dernière en position fermée.

L'ouvrant arrière 14 est susceptible d'être ouvert selon deux modes d'ouverture distincts. Nous allons à présent décrire ces deux modes d'ouverture.

On a représenté à la figure 1 l'ouvrant arrière 14 dans un premier mode d'ouverture dans lequel il se comporte comme s'il était constitué de deux portes battantes traditionnelles 36, 38. Le cadre porteur 28 est alors en position basse rabattue, Les axes de pivotement A2 et A3 des portes battantes 36 et 38 sont globalement verticaux et les portes battantes 36 et 38 occupent la position extrême ouverte.

On a représenté à la figure 4 l'ouvrant arrière 14 dans un second mode d'ouverture dans lequel il se comporte comme s'il était constitué d'un hayon 14. Le cadre porteur 28 est alors en position haute et les portes battantes 36 et 38 sont en position extrême fermée. Les portes battantes 36, 38 qui sont fermées de manière solidaire sur le cadre porteur 28 forment, avec le cadre porteur 28, un hayon 14.

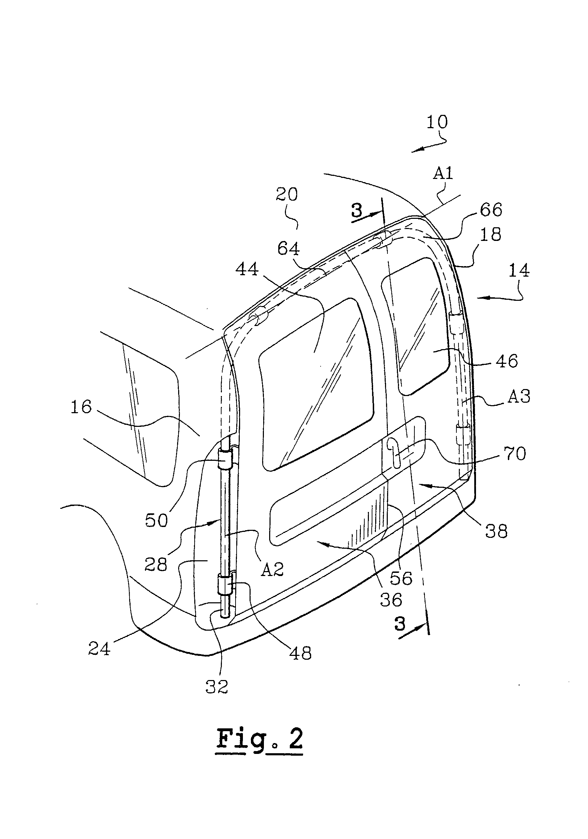

On a représenté à la figure 2 l'ouvrant arrière 14 dans une position extrême de fermeture dans laquelle le cadre porteur 28 est en position basse rabattue et les portes battantes 36 et 38 en position extrême fermée.

Les portes battantes 36, 38 occupent alors une position globalement transversale dans laquelle elles obturent l'ouverture arrière 12 par coopération entre la face antérieure 60, 62 des portes battantes 36, 38 et la totalité du pourtour 26, 22 de l'ouverture arrière 12.

Le bord supérieur 64 et 66 de chaque porte battante, 36 et 38, est incliné vers l'avant de façon à recouvrir sensiblement la traverse supérieure 30 du cadre porteur 28. Le bord supérieur 64 et 66 de chaque porte battante 36 et 38 se situe ainsi dans le prolongement du pavillon 20 du véhicule 10 en masquant le logement 24 en forme de gouttière.

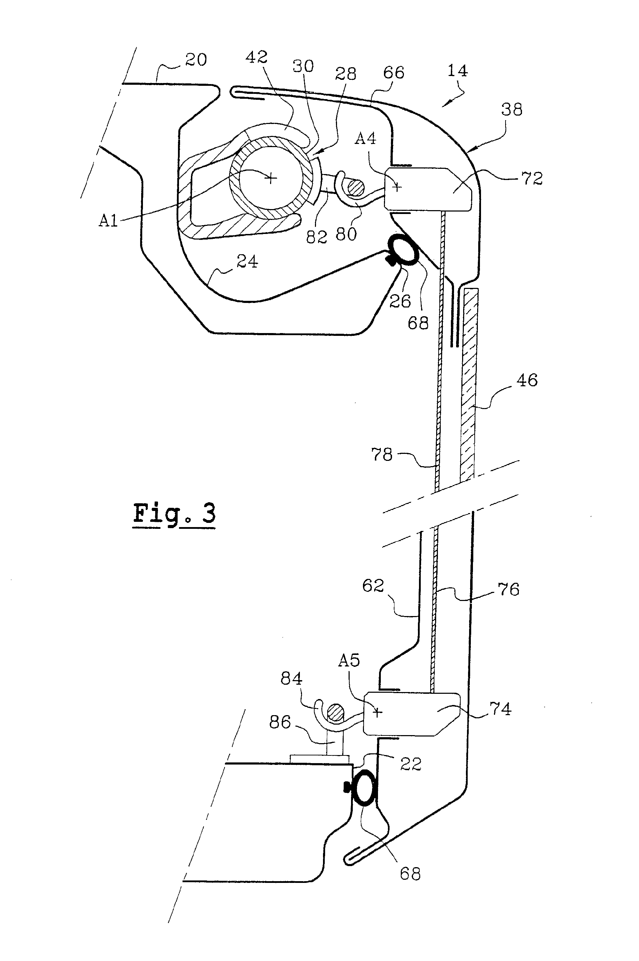

La face antérieure 60, 62 des portes battantes 36 et 38 est ainsi appliquée sur le pourtour 26, 22 de l'ouverture arrière 12. Comme illustré à la figure 3, le pourtour 26, 22 de l'ouverture arrière 12 comporte une garniture 68 destinée à assurer l'étanchéité entre la structure du véhicule 10 et les faces antérieures 60, 62 des portes battantes 36, 38 de l'ouvrant arrière 14 en position basse fermée. Avantageusement, la garniture d'étanchéité sera constituée d'un cordon qui est ici formé par un unique joint d'étanchéité en dépit des deux modes d'ouverture de l'ouvrant 14.

Selon une variante non représentée de l'invention, la garniture d'étanchéité est constituée d'un cordon formés par plusieurs joints d'étanchéité aboutés.

La porte battante de droite 38 comporte ici une poignée 70 qui commande l'ouverture de l'ouvrant arrière 14, comme illustré à la figure 2. Cette poignée 70 commande une serrure supérieure 72 et une serrure inférieure 74 par l'intermédiaire de deux câbles 76, 78, comme représenté à la figure 3. La poignée 70 permet ainsi de sélectionner le mode d'ouverture de l'ouvrant arrière 14.

La serrure supérieure 72 est ici située sur l'extrémité gauche du bord supérieur 66 de la porte battante de droite 38. Elle comporte un pêne supérieur crochu 80 qui est destiné à coopérer avec une gâche supérieure fixe 82 par rapport au cadre porteur 28 afin de bloquer le pivotement de la porte battante de droite 38 par rapport au cadre porteur 28. La gâche supérieure 82 est ici formée par un anneau globalement horizontal fixé sur la traverse 30 du cadre porteur 28. Le pêne supérieur 80 est ici monté à rotation par rapport à la porte battante de droite 38 autour d'un axe transversal A4 entre une position verrouillée dans laquelle le pêne supérieur 80 est accroché à la gâche supérieure 82 et une position déverrouillée dans laquelle le pêne supérieur 80 est dégagé de la gâche supérieure 82.

La serrure inférieure 74 est globalement similaire à la serrure supérieure 72. Elle comporte aussi un pêne inférieur crochu 84 articulé autour d'un axe transversal A5 et une gâche inférieure 86 qui est ici fixe par rapport au plancher du véhicule 10 afin de bloquer le pivotement de la porte battante de droite 38 par rapport à la structure du véhicule 10. La gâche inférieure 86 est ici formé par un anneau qui s'étend dans un plan globalement vertical transversal. Le fonctionnement de la serrure inférieure 74 est similaire à celui de la serrure supérieure 72.

Nous allons à présent décrire le fonctionnement du premier mode d'ouverture de l'ouvrant arrière 14.

L'ouvrant arrière 14 est en position fermée sur l'ouverture arrière 12 du véhicule 10, les deux serrures 72, 74 sont en position verrouillée sur le cadre porteur 28 et sur la structure du véhicule 10. Le pivotement de la porte battante de droite 38 est ainsi empêché. Le bord gauche 56 de la porte battante de droite 38 qui chevauche la porte battante de gauche 36 bloque ici le pivotement de la porte battante de gauche 36 autour de son axe de pivotement A2.

L'utilisateur saisit la poignée 70 et sélectionne le mode d'ouverture en porte battante. La poignée 70 commande alors le passage sensiblement simultané des serrures 72, 74 en position déverrouillée, par exemple par pivotement de la poignée 70 selon un axe de direction longitudinale L, dans un sens anti-horaire selon la figure 2.

La porte battante de droite 36 est alors libre de pivoter autour de son axe de pivotement A3. L'utilisateur tire la poignée 70 vers l'arrière afin de déplacer la porte battante de droite 38 vers sa position extrême ouverte. Le bord gauche 56 de la porte battante de droite 38 ne bloque alors plus le pivotement de la porte battante de gauche 36 autour de son axe de pivotement A2. L'utilisateur amène ainsi les deux portes battantes 36, 38 vers leur position extrême ouverte.

La rotation du cadre porteur 28 autour de son axe transversal A1 n'est pas ici bloquée par rapport à la structure du véhicule 10. Le cadre porteur 28 est ici maintenu en position basse rabattue par le poids des portes battantes 36, 38.

Les portes battantes 36, 38 sont ensuite ramenées en position extrême fermée selon la démarche inverse.

Nous allons à présent décrire le fonctionnement du second mode d'ouverture de l'ouvrant arrière 14.

L'ouvrant arrière 14 est en position fermée sur l'ouverture arrière 12 du véhicule 10, les deux serrures 72, 74 sont en position verrouillée sur le cadre porteur 28 et sur la structure du véhicule 10.

Afin de déplacer l'ouvrant arrière 14 en position ouverte haute, l'utilisateur sélectionne le mode d'ouverture désiré par l'intermédiaire de la poignée 70. Cette dernière commande alors le déverrouillage de la serrure inférieure 74, par exemple par pivotement de la poignée 70 autour d'un axe (non représenté) de direction transversale T, en remontant la poignée vers l'arrière et vers le haut selon la figure 2. La serrure supérieure 72 demeure en position verrouillée de façon que les portes battantes 36, 38 en position extrême fermée et le cadre porteur 28 forment un ensemble solidaire.

Les portes battantes 36, 38 et le cadre porteur 28 forment alors hayon 14 articulé autour de l'axe transversal de rotation A1 du cadre porteur 28. La serrure inférieure 74 étant en position déverrouillée, le hayon 14 est libre de tourner autour de l'axe transversal A1.

L'utilisateur tire alors la poignée 70 vers l'arrière et soulève le hayon 14 qui tourne autour de son axe transversal A1 jusqu'à atteindre la position haute ouverte de l'ouvrant arrière 14.

Dans une variante de l'invention, la porte battante de droite 38 comporte un verrou supplémentaire destiné à verrouiller la porte battante de droite 38 par rapport à la porte battante de gauche 36. Ce verrou supplémentaire permet ainsi de rigidifier l'assemblage des deux portes battantes 36, 38 sur le cadre porteur 28 lorsque l'ouvrant arrière 14 forme un hayon 14.

## Revendications

1. Agencement pour l'obturation d'une ouverture de véhicule automobile (10), et notamment d'une ouverture arrière (12), du type qui comporte un cadre porteur (28) globalement plan sur lequel au moins une porte (36, 38) est montée pivotante entre une position extrême ouverte dans laquelle la porte (36, 38) est sensiblement orthogonale au cadre porteur (28) et une position extrême fermée dans laquelle la porte (36, 38) est sensiblement dans le même plan que le cadre porteur (28), qui est lui-même monté articulé par rapport à la structure (20) du véhicule (10) autour d'un axe transversal supérieur fixe (A1) entre une position haute dans laquelle le cadre porteur (28) est sensiblement horizontal et une position basse rabattue dans laquelle l'ouverture arrière (12) du véhicule (10) est obturée lorsque la porte (36, 38) est en position extrême fermée, et du type qui comporte un mécanisme de verrouillage (72, 74) qui bloque sélectivement le pivotement de la porte (36, 38) par rapport au cadre porteur (28) et/ou l'articulation du cadre porteur (28) par rapport à la structure (20) du véhicule (10),
**caractérisé en ce que** la porte (36, 38) est montée pivotante par rapport au cadre porteur (28) autour d'un axe de pivotement (A2, A3) qui est orthogonal à l'axe transversal supérieur d'articulation (A1) du cadre porteur (28) par rapport au véhicule (10).

2. Agencement selon la revendication précédente, **caractérisé en ce que** le cadre porteur (28) comporte notamment une traverse transversale supérieure (30) et un montant latéral vertical (32, 34) qui, en position rabattue, entourent le pourtour (22, 26) de l'ouverture arrière (12), à l'extérieur de ce dernier

3. Agencement selon la revendication précédente, **caractérisé en ce que**, en position basse rabattue du cadre porteur (28), la porte (36, 38), en position extrême fermée, obture l'ouverture arrière (12) par coopération avec la totalité du pourtour (22, 26) de l'ouverture arrière (12).

4. Agencement selon la revendication précédente, **caractérisé en ce que** le pourtour (22, 26) de l'ouverture arrière (12) porte un joint (68) avec lequel la porte (36, 38) coopère en position extrême fermée lorsque le cadre porteur (28) est en position basse rabattue afin d'assurer globalement l'étanchéité de l'agencement.

5. Agencement selon l'une des revendications 2 à 4, **caractérisé en ce qu'**il est prévu sur le véhicule automobile (10) un logement (24) en forme de gouttière qui entoure l'ouverture arrière (12) et dans lequel le cadre porteur (28) est logé en position rabattue.

6. Agencement selon l'une des revendications précédentes, **caractérisé en ce que** le mécanisme de verrouillage (72, 74) comporte un premier verrou (72) qui est susceptible de bloquer la porte (36, 38) par rapport au cadre porteur (28) et un second verrou (74) qui est susceptible de bloquer la porte (36, 38) par rapport à la caisse du véhicule automobile (10).

7. Agencement selon la revendication précédente, **caractérisé en ce que** des moyens de commande (70) de l'ouverture de l'ouvrant (14) commandent sélectivement l'ouverture du premier verrou (72) seul ou l'ouverture simultanée des deux verrous (72, 74).

8. Agencement selon l'une des revendications précédentes, **caractérisé en ce qu'**il comporte deux portes battantes (36, 38) dont chacune est montée pivotante par rapport au cadre porteur (28) autour d'un axe vertical (A2, A3) agencé au voisinage d'un montant vertical (32, 34) associé du cadre porteur (28).
